# EUROPÄISCHE PATENTSCHRIFT

(11) **EP 2 314 472 B1**
(45) Veröffentlichungstag und Bekanntmachung des Hinweises auf die Patenterteilung: **23.01.2013**
(21) Anmeldenummer: 10177757.1
(22) Anmeldetag: 21.09.2010
(51) Int. Cl.: B60K 17/16, B60K 17/346

(54) **Getriebeanordnung für ein Fahrzeug und Getriebe mit der Getriebeanordnung**
Drive assembly for a vehicle and transmission with the drive assembly
Agencement d'engrenage pour un véhicule et transmission doté de l'agencement d'engrenage

(30) Priorität: 20.10.2009 DE 102009049856
(43) Veröffentlichungstag der Anmeldung: 27.04.2011
(73) Patentinhaber: Schaeffler Technologies AG & Co. KG, 91074 Herzogenaurach (DE)
(72) Erfinder: Biermann, Thorsten, 96193, Wachenroth (DE)

(56) Entgegenhaltungen:
- DE-A1- 10 319 684
- DE-A1-102007 011 895
- US-A1- 2005 192 151
- US-A1- 2007 010 370
- US-A1- 2008 064 552

## Beschreibung

### Gebiet der Erfindung

Die Erfindung betrifft eine Getriebeanordnung für ein Fahrzeug mit einem Verteilergetriebe zur Verteilung eines Antriebsdrehmoments eines Hauptmotors auf einen ersten und einen zweiten Achsenbereich des Fahrzeug. Die Erfindung betrifft auch ein Getriebe mit der Getriebeanordnung.

In Fahrzeugen werden zur Verteilung des Antriebsdrehmoments Differentialgetriebe und Verteilergetriebe eingesetzt. Die Verteilergetriebe werden insbesondere dazu verwendet, bei einem allradangetriebenen Fahrzeug das Antriebsdrehmoment zwischen einer Vorderachse und einer Hinterachse zu verteilen. Den Achsen sind üblicher Weise jeweils ein Differentialgetriebe zugeordnet, welches das bereits aufgeteilte Antriebsdrehmoment auf die beiden Räder einer Achse verteilt. Diese selektive Verteilung des Antriebsdrehmoments auf die 4 angetriebenen Räder ist vorteilhaft, da zum Beispiel bei Kurvenfahrten die kurveninneren Räder langsamer drehen als die kurvenäußeren Räder. Durch die Differentialgetriebe ist es möglich, diese Unterschiede in den Winkelgeschwindigkeiten der Räder zu kompensieren.

Es hat sich gezeigt, dass es vorteilhaft sein kann, das Antriebsdrehmoment einer Achse nicht nur konstant zu teilen, sondern aktiv zu verteilen. Die Druckschrift DE 10 2007 011 895 A1, die wohl den nächstkommenden Stand der Technik bildet, betrifft zum Beispiel ein Stirnraddifferential, bei dem mittels von Drehzahlstellgliedern den Hinterrädern oder verschiedenen Achsen über elektronisch bzw. hydraulisch betätigte Überlagerungsstufen eines Überlagerungsdifferentials eine Drehzahldifferenz aufgezwungen werden kann.

*Die gattungsbildende* DE90319684A1 *zeigt verschiedene Getriebeanordnungen für Fahrzeuge mit Verteilergetrieben zur Verteilung eines Antriebsmoments eines Hauptmotors auf einen ersten und einen zweiten Achsenbereich. Eines der Verteilergetriebe zwei miteinander kombinierte Planetentriebe auf. Das Antriebsmoment des Hauptmotors wird über den Planetenträger in das Verteilergetriebe auf die Achsenbereiche verteilt. Ein erster Planetentrieb der kombinierten Planetentriebe weist einen Planetenträger. An dem Planetenträger sind mehrere Planetenbolzen angeordnet. Der erste Planetentrieb weist außerdem Planeten auf, von denen jeder auf einem der Planetenbolzen sitzt. Die Planeten kämmen mit einer Sonne. Der zweite Planetensatz weist den Planetenträger auf un die Planetenräder beider Planetensätze sind jeweils paarweise auf einem gemeinsamen Bolzen angeordnet. Die ersten Planeten kämmen mit einer weiteren Son*ne.

*Eine weitere Getriebeanordnungen sieht in* DE1 0319684A1 *ein Verteilergetriebe mit einer Überlagerungsstufe zur Einkopplung eines Zusatzdrehmoments vor, das von einem mit der Überlagerungsstufe in Wirkverbindung stehenden Hilfsmotor über die Überlagerungsstufe und das Verteilergetriebe auf den ersten und zweiten Achsenbereich ausgeübt werden kann. Das als ein Stimradgetriebe ausgebildete Verteilergetriebe weist zwei miteinander kombinierte Planetentriebe auf. Der erste Planetentrieb ist aus einem Planetenträger an dem mehrere Planetenbolzen angeordnet sind, aus Planeten, von denen jeder auf einem der Planetenbolzen sitzt aus einer Sonne, mit welcher die Planeten kämmen gebildet.*

*Schließlich ist in* DE10319684A1 *eine Getriebeanordnung mit einem Verteilergetriebe beschrieben, welches auch zwei miteinander kombinierte Planetentriebe aufweist. Das Antriebsmoment des Hauptmotors wird_über_einen Planetenträger des Verteilergetriebes in dem Verteilergetriebe auf zwei Achsenbereiche verteilt. Ein erster Planetentrieb weist einen Doppelplanetensatz mit Planeten auf, von denen jeder auf einem der Planetenbolzen sitzt. Die Planeten kämmen mit einer Sonne. Der zweite Planetensatz weist den Planetenträger auch auf und die Planetenräder beider Planetensätze sind jeweils paarweise auf einem gemeinsamen Bolzen angeordnet. Die ersten Planeten des Doppelplanetensatzes kämmen mit einer weiteren Sonne.*

### Beschreibung der erfindung

Der Erfindung liegt die Aufgabe zugrunde, eine Getriebeanordnung sowie ein Getriebe mit der Getriebeanordnung für ein Fahrzeug vorzuschlagen, welches in vielen Fahrsituationen einen sicheren Betrieb ermöglicht.

Diese Aufgabe wird durch eine Getriebeanordnung mit den Merkmalen des Anspruchs 1 sowie durch ein Getriebe mit den Merkmalen des Anspruchs 13 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Getriebeanordnung vorgeschlagen, die für ein Fahrzeug, insbesondere für ein allradangetriebenes Fahrzeug, im speziellen für einen allradangetriebenen Personenkraftwagen, geeignet und/oder ausgebildet ist. Sie umfasst ein Verteilergetriebe, welches zur Verteilung eines Antriebsdrehmoments eines Hauptmotors auf einen ersten und einen zweiten Achsenbereich des Fahrzeuges ausgebildet ist. Beispielsweise ist das Verteilergetriebe ausgebildet, das Antriebsdrehmoment unter anderem in einem Verhältnis zwischen 10:90 und 90:10, z.B. 50:50 zu verteilen. Das Verteilergetriebe kann eine eigenständige Baugruppe darstellen, welche beispielsweise in einem eigenen Getriebegehäuse untergebracht ist, oder einen integralen Teil eines Getriebes und/oder der Getriebeanordnung bilden.

Der Hauptmotor ist bevorzugt als ein Verbrennungsmotor, insbesondere Benzin- oder Dieselmotor, ausgebildet. Erster und zweiter Achsenbereich beziehen sich bevorzugt auf die Vorder- bzw. Hinterachse des Fahrzeuges.

Erfindungsgemäß wird eine Überlagerungsstufe vorgeschlagen, welche zur Einkopplung eines Zusatzdrehmoments von einem Hilfsmotor über das Verteilergetriebe auf den ersten und/oder den zweiten Achsenbereich ausgebildet ist. Insbesondere ist der Hilfsmotor als ein Elektromotor und/oder separat zu dem Hauptmotor ausgebildet. Besonders bevorzugt ist der Eingang für das Zusatzdrehmoment innerhalb des Verteilergetriebes separat zu den Ausgängen des Verteilergetriebes zu dem ersten bzw. zweiten Achsenbereich angeordnet und/oder ausgebildet. Die Getriebeanordnung ist insbesondere ausgebildet, das Zusatzdrehmoment selektiv und/oder wahlweise entweder auf den ersten oder auf den zweiten Achsenbereich zu schalten.

Mit der neuen Getriebeanordnung ist es möglich, unabhängig von dem Antriebsdrehmoment des Hauptmotors ein Zusatzdrehmoment auf den ersten oder den zweiten Achsenbereich zu schalten, so dass unabhängig von dem Betriebszustand des Hauptmotors ein zusätzliches Zusatzdrehmoment auf den ersten oder zweiten Achsenbereich aufgebracht werden kann. Diese Möglichkeit erhöht die Sicherheit des Fahrzeuges, da in kritischen Situationen das Aufschalten des Zusatzdrehmoments jederzeit durch den Hilfsmotors erreicht werden kann. Insbesondere weist die Getriebeanordnung nur einen einzigen Hilfsmotor zur Einkopplung des Zusatzdrehmoments auf, welcher mit beiden Achsenbereiche in Wirkverbindung bringbar ist.

Bei einer besonders bevorzugten Ausführungsform der Erfindung ist der Hilfsmotor über die Überlagerungsstufe in permanenter, ständiger, unauskoppelbarer und/oder unausgekoppelter Wirkverbindung mit dem Verteilergetriebe und insbesondere mit dem ersten und dem zweiten Achsenbereich. Es ist dabei vorzugsweise vorgesehen, dass in einem Normalbetrieb, in dem kein zusätzliches Zusatzdrehmoment benötigt wird, der Hilfsmotor zumindest bei Geradeausfahrt still steht, wobei keine zusätzlichen Verluste in den Antriebsstrang begründet werden. Die Überlagerungsstufe ist so ausgebildet, dass bei einer Aktivierung des Hilfsmotors in eine erste Drehrichtung das Zusatzdrehmoment auf einen ersten der zwei Achsenbereiche und bei Aktivierung in die Gegendrehrichtung auf den zweiten der zwei Achsenbereiche aufgeschaltet wird. Der Vorteil der Getriebeanordnung ist dadurch ersichtlich: Bei Geradeausfahrt kann der Hilfsmotor abgeschaltet bleiben und es werden keine Verlust in der Getriebeanordnung erzeugt. Bei der Aktivierung des Hilfsmotors in eine erste Drehrichtung wird das Zusatzdrehmoment auf einen ersten und bei Aktivierung in einer gegensätzlichen, zweiten Drehrichtung auf den anderen Achsenbereich gelenkt, so dass auch die Ansteuerung der Getriebeanordnung bzw. der Überlagerungsstufe sehr einfach ist.

Das Verteilergetriebe und/oder die Überlagerungsstufe *weisen* mindestens einen Planetentrieb auf und jeweils als Stirnradgetriebe ausgebildet ist. Durch die Realisierung als Stirnradgetriebe kann das Verteilergetriebe bzw. die Überlagerungsstufe sehr kompakt und trotzdem mit hoher Qualität gefertigt werden.

Die Erfindung sieht vor, dass das Zusatzdrehmoment über einen Eingangsplaneten des Verteilergetriebes in das Verteilergetriebe eingekoppelt und über einen Ausgangsplaneten der Überlagerungsstufe aus der Überlagerungsstufe ausgekoppelt wird. Die Übergabe des Zusatzdrehmoments erfolgt somit vorzugsweise über zwei drehfest miteinander gekoppelte Planeten, wobei der eine Planet dem Verteilergetriebe und der andere Planet der Überlagerungsstufe zugeordnet ist.

Es ist bevorzugt, wenn die Überlagerungsstufe ein Übersetzungsgetriebe mit i>1, also mit einer Untersetzung, aufweist. Dieses Übersetzungsgetriebe ist vorzugsweise als ein kombiniertes Planetengetriebe mit mehreren gekoppelten Planetensätzen ausgebildet. Es ist konstruktiv bevorzugt, dass eine erste Sonne, die mit dem Hilfsmotor gekoppelt und/oder koppelbar ist, und eine zweite Sonne, die stationär angeordnet ist, sowie eine dritte Sonne vorgesehen ist, welche das Zusatzdrehmoment in Richtung des Verteilergetriebes, insbesondere an den Ausgangsplaneten der Überlagerungsstufe übergibt. Hierzu ist es bevorzugt, dass die dritte Sonne über Planeten und/oder Hohlräder des Planetentriebs der ersten und/oder der zweiten Sonne angetrieben wird.

In einer vorteilhaften Ausführungsform der Erfindung weist der Hilfsmotor ein Drehmoment von mindestens 10 Nm, 20 Nm, 25 Nm, 40 Nm, vorzugsweise mindestens 60 Nm und insbesondere von mindestens 100 Nm auf. Bei einem Untersetzungsverhältnis von größer 30:1, vorzugsweise größer 40:1 und insbesondere größer 50:1 ist ein Zusatzdrehmoment von größer 1000 Nm erreichbar, welches auf die Achsenbereiche aufsummiert werden kann. Unabhängig von dem maximalen Drehmoment des Hilfsmotors ist es bevorzugt, wenn das Zusatzdrehmoment größer als 1000 Nm erreichbar ist.

Bei einer möglichen Realisierung der Erfindung ist das Verteilergetriebe für eine Getriebelängsanordnung mit separatem Vorder- und/oder Hinterraddifferentialgetriebe ausgebildet. In dieser Bauform ist die Getriebeanordnung auf die Verteilung des Antriebsdrehmoments und Zusatzdrehmoments auf die beiden Achsenbereiche reduziert.

In dieser Ausgestaltung ist es besonders bevorzugt, wenn das Verteilergetriebe mindestens zwei, vorzugsweise genau zwei miteinander kombinierte und/oder gekoppelte Planetensätze aufweist. Insbesondere ist vorgesehen, dass die Planeten des einen Planetensatzes mit den Planeten des anderen Planetensatzes kämmen.

Bei einer anderen möglichen konstruktiven Realisierung ist die Getriebeanordnung als ein Front-Quergetriebe ausgebildet, welches zum einen die Funktion der Verteilung des Antriebsdrehmoments auf die beiden Achsenbereiche und zudem die Verteilung des Antriebsdrehmoments des vorderen Achsenbereiches auf die zwei Räder umsetzt.

In dieser Ausführungsform ist vorgesehen, dass das Verteilergetriebe eine Abtriebsstufe für den zweiten Achsenbereich und eine Differentialstufe für den ersten Achsenbereich umfasst. Die Abtriebsstufe übergibt das Antriebsdrehmoment bzw. Anteile davon an den zweiten Achsenbereich, die Differentialstufe verteilt Anteile des Antriebsdrehmoment insbesondere ungleichmäßig auf die zwei Räder des vorderen Achsenbereiches. In dieser Konfiguration ist es weiterhin bevorzugt, wenn der Eingangsplanet einem Planetensatz der Abtriebsstufe zugeordnet ist.

Ein weiterer Gegenstand der Erfindung betrifft *auch* ein Getriebe , welches neben der Getriebeanordnung, wie sie zuvor beschrieben wurde *und die* mindestens ein Achsdifferentialgetriebe aufweist, dem eine Überlagerungsstufe mit einem weiteren Hilfsmotor zugeordnet ist. Beispielsweise ist es möglich, dass in der Bauform des Verteilergetriebes in einer Getriebelängsanordnung sowohl die Vorderachse als auch die Hinterachse ein Achsdifferentialgetriebe aufweisen, wobei jedem Achsdifferentialgetriebe ein Hilfsmotor zugeordnet ist, welcher ausgebildet und/oder angeordnet ist, über die weitere Überlagerungsstufe selektiv ein zusätzliches Drehmoment auf ein Rad des jeweiligen Achsenbereiches zu führen. In dieser Ausgestaltung kann somit selektiv jedes Rad mit einem zusätzlichen Zusatzdrehmoment beaufschlagt werden.

In der Ausführung als ein Frontquerbetriebe kann zumindest das Achsdifferentialgetriebe für die hintere Achse einen derartiges Achsdifferentialgetriebe mit zusätzlichen Hilfsmotor aufweisen. Gegebenenfalls kann in dieser Ausführung auch die Differentialstufe für den ersten Achsenbereich eine ergänzende Überlagerungsstufe mit einem weiteren Hilfsmotor zeigen.

Weitere Merkmale, Vorteile und Wirkungen der Erfindung ergeben sich aus der nachfolgenden Beschreibung bevorzugter Ausführungsbeispiele der Erfindung sowie den beigefügten Figuren. Dabei zeigen:
- Figur 1: eine schematische Darstellung eines Verteilerdifferentials mit aktiver Momentenverteilung als ein erstes Ausführungsbeispiel der Erfindung;
- Figur 2: ein weiteres Verteilerdifferential mit aktiver Momentenverteilung als ein zweites Ausführungsbeispiel der Erfindung;
- Figur 3: ein Allraddifferential an der Vorderachse mit aktiver Momentenverteilung als ein drittes Ausführungsbeispiel der Erfindung;
- Figur 4: ein ähnliches Allraddifferential als fünftes Ausführungsbeispiel der Erfindung;
- Figur 5: ein weiteres Allraddifferential als fünftes Ausführungsbeispiel der Erfindung;
- Figur 6: ein Allraddifferential als ein sechstes Ausführungsbeispiel der Erfindung.

Einander entsprechende oder gleiche Teile bzw. Bereiche sind jeweils mit den gleichen Bezugszeichen versehen.

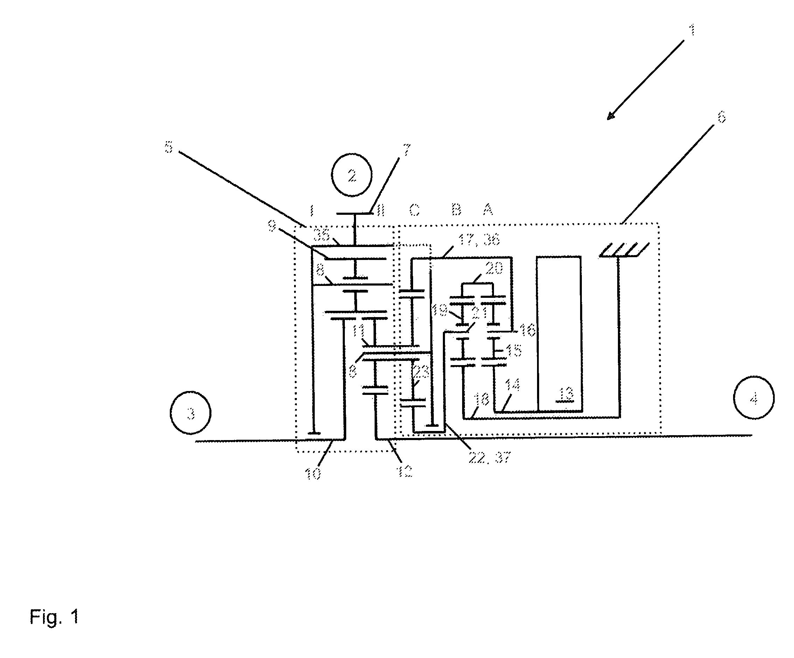

Die Figur 1 zeigt in einer schematischen Darstellung eine Getriebeanordnung 1 in Form eines Verteilerdifferentials mit aktiver Momentenverteilung in einer Getriebelängsanordnung. Die Getriebeanordnung 1 ist - wie auch alle nachfolgenden Getriebeanordnungen - zur Integration in ein Fahrzeug, insbesondere in einen Personenkraftwagen, mit Allradantrieb geeignet und/oder ausgebildet. Die Darstellung der Figur 1 sowie der nachfolgenden Figuren zeigen jeweils bloß die Hälfte der Getriebeanordnung 1, die zeichnerisch unterdrückte Hälfte ist gedanklich zu ergänzen.

Die Getriebeanordnung 1 ist mit einem Antrieb 2, welcher Antriebsdrehmomente eines Hauptmotors, insbesondere eines Verbrennungsmotors, zur Verfügung stellt, gekoppelt. Ferner weist die Getriebeanordnung 1 einen Vorderachsabtrieb 3 zur Übertragung des Antriebmoments bzw. eines Teils davon auf eine Vorderachse als einen ersten Achsenbereich und einen Hinterachsabtrieb 4 zur Übertragung des Antriebsdrehmoments bzw. eines Teils davon auf die Hinterachse als einen zweiten Achsenbereich auf.

Die Getriebeanordnung 1 kann in ein Verteilergetriebe 5 und in eine Überlagerungsstufe 6 unterteilt werden, welche miteinander ständig, insbesondere u-nauskoppelbar, in Wirkverbindung stehen. Das Verteilergetriebe 5 weist als Eingang eine Kopplung zu dem Antrieb 2 sowie als Ausgänge den Vorderachsabtrieb 3 und den Hinterachsabtrieb 4 auf. Das Verteilergetriebe 5 ist als ein Stirnraddifferentialgetriebe ausgebildet und weist zwei miteinander gekoppelte oder kombinierte Planetentriebe I und II auf, die, wie nachfolgend noch erläutert wird, die Antriebsdrehmomente vom Antrieb 2 zu den Abtrieben 3, 4 übertragen.

Der Antrieb 2 greift an ein Antriebsrad 7, insbesondere Antriebszahnrad, des Verteilergetriebes 5 ein. Das Antriebsrad 7 ist an einem Planetenträger 35 festgelegt, an dem mehrere Planetenbolzen 8 angeordnet sind. Auf jedem der Planetenbolzen 8 sitzt ein Planet 9, welche mit einer Sonne 10 kämmen, die mit dem Vorderachsabtrieb 3 gekoppelt ist. Somit bilden Antriebsrad 7, Planetenträger 35 mit den Planetenbolzen 8, Planeten 9 und die Sonne 10 den ersten Planetentrieb I.

Des Weiteren kämmen die Planeten 9 mit ersten Planeten 11, die auf dem gleichen Planetenträger 35, der mit dem Antriebsrad 7 fest verbunden ist, auf weiteren Planetenbolzen 8 drehbar gelagert sind. Die ersten Planeten 11 kämmen wiederum mit einer Sonne 12, die den Hinterachsabtrieb 4 darstellt. Antriebsrad 7, Planetenbolzen 8, Planetenträger 35, erste Planeten 11 und Sonne 12 bilden somit den zweiten Planetentrieb II. Insgesamt setzt das Verteilergetriebe 5 zwei miteinander kombinierte Planetentriebe um, deren Kombination insbesondere darin besteht, dass die Planeten 9 und das Antriebsrad 7 beiden Planetentriebe I, II und die ersten Planeten 11 nur dem Planententrieb II zugeordnet sind. Das Verteilergetriebe 5 setzt den Abtrieb über zwei Sonnen 10, 12 um. Bei anderen Ausführungsformen kann der Abtrieb auch über einen Steg und eine Sonne erfolgen.

Die Überlagerungsstufe 6 besteht aus drei miteinander kombinierten Planetentrieben A, B, C. Ein Elektromotor 13 bildet einen Hilfsmotor, wobei dessen Zusatzdrehmomente, wie nachfolgend noch erläutert wird, durch die drei Planetentriebe A, B, C untersetzt werden. Die kombinierten Planetentriebe A, B, C setzen das Zusatzdrehmoment zum Beispiel in einem Verhältnis 40:1 um.

Durch den Elektromotor 13 wird eine erste Sonne 14 angetrieben, die mit Planeten 15 kämmt, die auf Planetenbolzen16 eines Planetenträgers 36 sitzen, der mit einem Hohlrad 17 gekoppelt ist. Erste Sonne 14, Planeten 15, Planetenbolzen 16, Planetenträger 36 und Hohlrad 17 bilden damit den Planetentrieb A.

Bei dem zweiten Planetentrieb B ist eine zweite Sonne 18 fixiert oder stationär angeordnet und kämmt mit Planeten 19, welche über ein gemeinsames Hohlrad 20 mit den Planeten 15 gekoppelt sind. Planetenbolzen der Planeten 19 sitzen an einem Planetenträger 37, der drehfest mit einer dritten Sonne 22 des dritten Planetentrieb C gekoppelt ist. Der zweite Planetentrieb B wird durch die zweite Sonne 18, den Planeten 9, den Planetenbolzen 21, Planetenträger 37 und dem Hohlrad 20 gebildet.

Die dritte Sonne 22 kämmt mit zweiten Planeten 23, welche zugleich mit dem Hohlrad 17 kämmen, so dass durch zweite Planeten 23, Hohlrad 17 und dritte Sonne 22 der dritte Planetentrieb C gebildet ist.

Jeweils ein zweiter Planet 23 ist drehfest mit einem der ersten Planeten 11 des Verteilergetriebes 5 gekoppelt, wobei sowohl erste Planeten 11 als auch zweite Planeten 23 jeweils auf einem gemeinsamen Planetenbolzen 8 angeordnet sind, der in dem gemeinsamen Planetenträger 35 des Verteilergetriebes 5 festgelegt ist.

Für den Fall, dass der Elektromotor 13 stromlos ist, kann sich das Antriebsdrehmoment auf den Vorderachsabtrieb 3 bzw. Hinterachsabtrieb 4 verteilen, wie dies aus dem Stand der Technik bekannt ist. Für den Fall, dass der Elektromotor 13 in eine erste Drehrichtung ein Drehmoment aufbringt, wird einem der Abtriebe, also dem Vorderachsabtrieb 3 oder dem Hinterachsabtrieb 4, ein Zusatzdrehmoment, resultierend vom Drehmoment des Elektromotors 13 beaufschlagt. Beaufschlagt der Elektromotor 13 das Drehmoment in Gegenrichtung wird dem anderen Achsbereich das Zusatzdrehmoment beaufschlagt.

Somit ist es mit der Getriebeanordnung 1 möglich, die Momentenverteilung zwischen Vorder- und Hinterachse zu regeln bzw. zu steuern. Die Regelung erfolgt über den Elektromotor 13, der aufgrund der hohen Untersetzung der Überlagerungsstufe 6 mit verhältnismäßig geringen Momenten im Bereich von 20 Nm bis zu 2000 Nm Differenzmoment zwischen den Achsen erzeugen kann. Bei Verzicht auf eine aktive Momentenverteilung wird der elektrische Antrieb 13 bei unterschiedlichen Drehzahlen der Vorder- zur Hinterachse mitgeschleppt. In diesem Fall funktioniert der Antriebsstrang ähnlich einem permanenten Allrad, dessen Grundverteilung von den Übersetzungen im Verteilergetriebe abhängt. Bei einer durchdrehenden Achse kann der elektrische Antrieb 13 der Überlagerungsstufe 6 auch als Generator genutzt werden, und so eine elektrische Sperre darstellen. In diesem Fall wird bei Verlust der Haftung an einer Achse in einen Energiespeicher rekuperiert. Die Rekuperationsleistung ist dabei ausreichend, um die durchdrehende Achse zumindest abzubremsen.

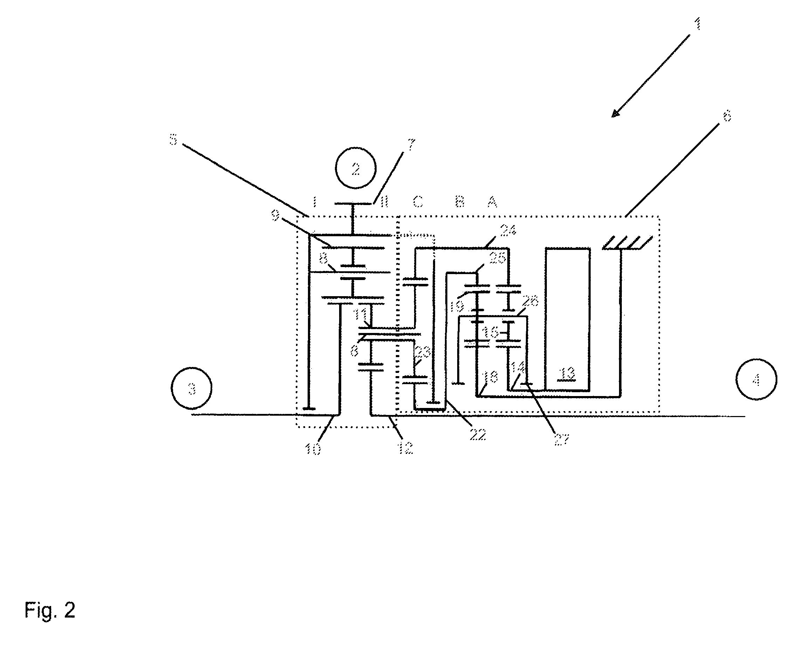

Die Figur 2 zeigt ein zweites Ausführungsbeispiel einer Getriebeanordnung 1, welche für den gleichen Einsatzzweck ausgebildet ist, wobei nachfolgend nur auf die Unterschiede zu dem Ausführungsbeispiel in der Figur 1 eingegangen wird. In der Überlagerungsstufe 6 ist zu erkennen, dass die zweiten Planeten 23 nun über ein Hohlrad 24 (die dem Hohlrad 17 in der Figur 1 entspricht) des Planetentriebs A radial außen und mit der dritten Sonne 22 in Eingriff stehen. Die dritte Sonne 22 ist mit dem Hohlrad 25 des Planetentrieb B gekoppelt. Um dies zu erreichen, erfolgt die Kopplung der Planeten 15 und 19 der Planetentriebe A und B nun über einen gemeinsamen Planetenbolzen 26, der auf einem frei drehenden Planetenträger 27 sitzt. Somit kann der Abtrieb letztlich über die zwei separaten Hohlräder 24 und 25 erfolgen.

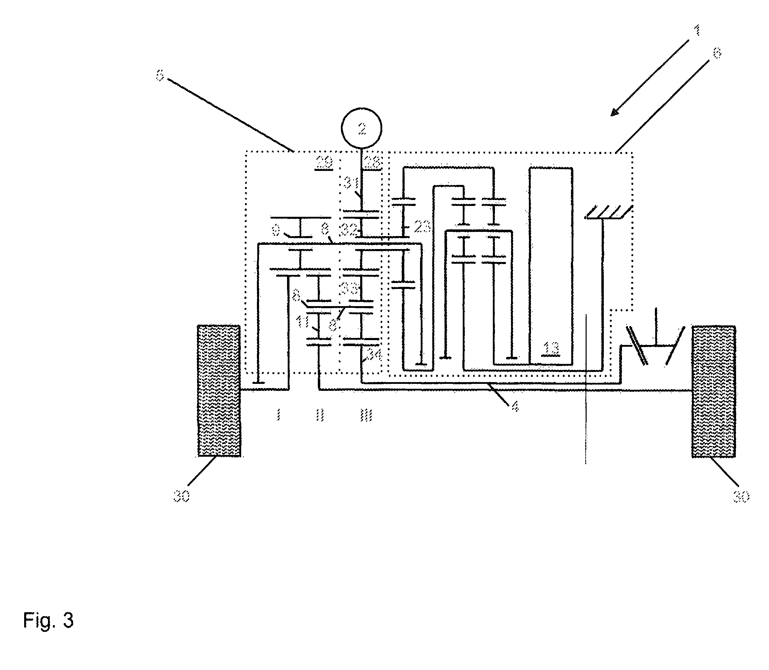

Die Figur 3 zeigt in einer ähnlichen Darstellung wie die vorhergehenden Figuren ein Allrad-Differential an der Vorderachse mit aktiver Momentenverteilung in Form einer Getriebeanordnung 1 als ein drittes Ausführungsbeispiel der Erfindung.

Die Getriebeanordnung 1 umfasst wieder eine Überlagerungsstufe 6 und ein Verteilergetriebe 5. Die Überlagerungsstufe 6 ist baugleich zu der Überlagerungsstufe 6 in der Figur 2 ausgebildet, so dass hinsichtlich der Beschreibung auf diese verwiesen wird.

Das Verteilergetriebe 5 kann, funktional betrachtet, in eine Planetenstufe 28 und in ein Differentialgetriebe 29 zerlegt werden. Die Planetenstufe 28 dient zur Übertragung des Antriebdrehmoments z.B. jeweils um 50% auf den Hinterachsabtrieb 4, welcher optional ein weiteres Getriebedifferential aufweisen kann. Das Differentialgetriebe 29 verteilt das Antriebsdrehmoment auf ein erstes und ein zweites angetriebenes Vorderrad 30 des vorderen Achsbereiches. Getriebetechnisch betrachtet ist das Differentialgetriebe 29 analog zu dem Verteilergetriebe 5 in den Figuren 1 und 2 aufgebaut, mit dem Unterschied, dass die zwei Abtriebe nicht auf die zwei Achsenbereiche, sondern auf die zwei Vorderräder 30 verteilt werden.

Die Planetenstufe 28 ist mit dem Antrieb 2 als Eingang gekoppelt und stellt als Ausgang den Hinterachsabtrieb 4 zur Verfügung. Die Planetenstufe 28 ist als ein Planetentrieb III realisiert, wobei der Antrieb 2 mit einem Hohlrad 31 gekoppelt ist, so dass das Antriebsdrehmoment über das Hohlrad 31 eingekoppelt werden kann und über dritte Planeten 32 und vierte Planeten 33 an eine Sonne 34, die den Hinterachsabtrieb 4 antreibt, weitergegeben wird. Die dritten Planeten 32 sind jeweils drehfest mit den zweiten Planeten 23 der Überlagerungsstufe 6 gekoppelt.

Die Kopplung der Antriebdrehmomente von der Planetenstufe 28 auf das Differentialgetriebe 29 erfolgt dadurch, dass die dritten Planeten 32 und die vierten Planeten 33 über jeweils gemeinsame Planetenbolzen 8 mit den Planeten 9 bzw. 11 des Differentialgetriebes 29 gekoppelt sind.

Die Funktionsweise der Getriebeanordnung 1 in der Figur 3 ist analog wie bei den Verteilerdifferentialen in den Figuren 1 und 2, wobei durch den Elektromotor 13 ein Zusatzdrehmoment auf den Hinterachsabtrieb 4 bzw. auf die Vorderräder 30 aufgebracht werden kann.

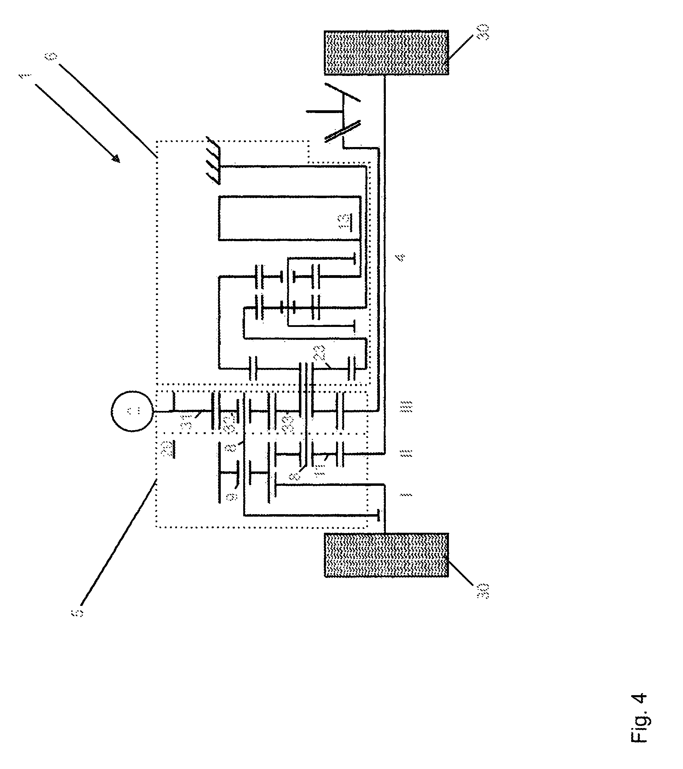

Die Figur 4 zeigt ein weiteres Ausführungsbeispiel des Allraddifferentials in der Figur 3, wobei im Vergleich zu der Figur 3 die Kopplung zwischen Überlagerungsstufe 6, Planetenstufe 28 und Differentialgetriebe 29 anders ausgebildet ist. Statt der Kopplung der zweiten Planeten 23 mit den dritten Planeten 32 sind die zweiten Planeten 23 nun drehfest mit den vierten Planeten 33 gekoppelt. Hinsichtlich der weiteren Ausgestaltung und der Funktion wird auf die vorhergehende Beschreibung verwiesen.

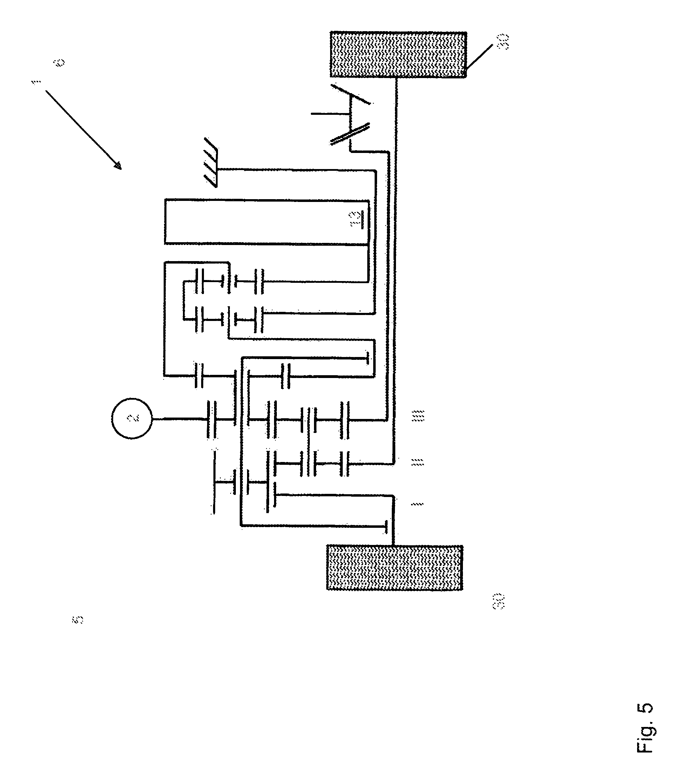

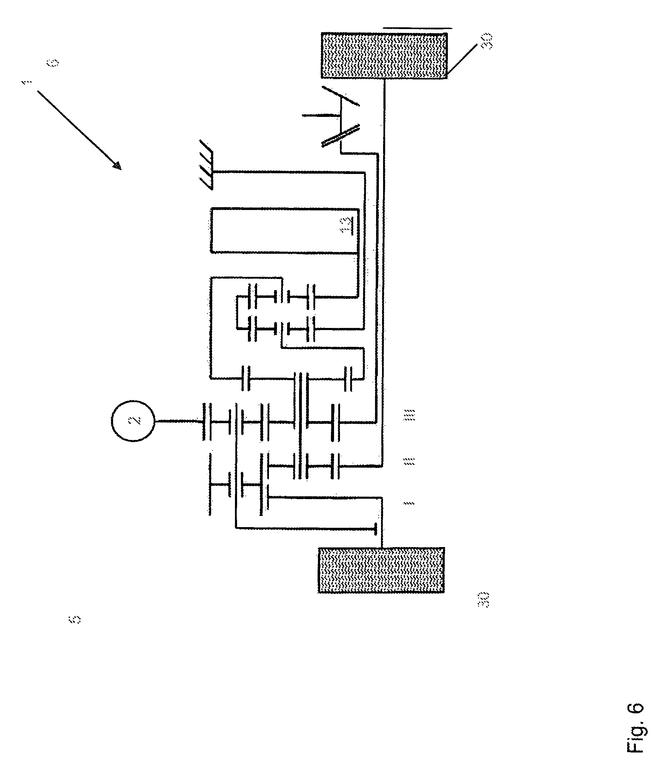

Die Figuren 5 und 6 zeigen Variationen der Allraddifferentiale in den Figuren 3 und 4, welche sich jeweils dadurch unterscheiden, dass statt der Überlagerungsstufe 6, wie sie eingangs in der Figur 2 beschrieben wurde, nun die Überlagerungsstufe 6 der Figur 1 verwendet wird. Somit wird für eine detaillierte Beschreibung auf diese früheren Figuren verwiesen.

### Bezugszeichenliste

- 1: Getriebeanordnung
- 2: Antrieb
- 3: Vorderachsabtrieb
- 4: Hinterachsabtrieb
- 5: Verteilergetriebe
- 6: Überlagerungsstufe
- 7: Antriebsrad
- 8: Planetenbolzen
- 9: Planeten
- 10: Sonne
- 11: erste Planeten
- 12: Sonne
- 13: Elektromotor, elektrischer Antrieb
- 14: erste Sonne
- 15: Planeten
- 16: Planetenbolzen
- 17: Hohlrad
- 18: zweite Sonne
- 19: Planeten
- 20: Hohlrad
- 21: Planetenbolzen
- 22: dritte Sonne
- 23: zweite Planeten
- 24: Hohlrad
- 25: Hohlrad
- 26: Planetenbolzen
- 27: Planetenträger
- 28: Planetenstufe
- 29: Differentialgetriebe
- 30: angetriebenes Vorderrad
- 31: Hohlrad
- 32: dritte Planeten
- 33: vierte Planeten
- 34: Sonne
- 35: Planetenträger
- 36: Planetenträger

## Patentansprüche

1. Getriebeanordnung (1) für ein Fahrzeug mit einem Verteilergetriebe (5) zur Verteilung eines Antriebsmoments eines Hauptmotors auf einen ersten und einen zweiten Achsenbereich (3,4) des Fahrzeugs, mit einer Überlagerungsstufe (6), wobei die Überlagerungsstufe (6) zur Einkopplung eines Zusatzdrehmoments von einem Über die Überlagerungsstufe (6) mit dem Verteilergetriebe in Wirkverbindung stehenden Hilfsmotor (13) über das Verteilergetriebe (5) auf den ersten und/oder den zweiten Achsenbereich (3, 4) ausgebildet ist und wobei das als ein Stirnradgetriebe ausgebildete Verteilergetriebe (6) zwei miteinander kombinierte Planetentriebe (I,II) aufweist, wobei der erste Planetentrieb (I) aus einem Planetenträger (35), an dem mehrere Planetenbolzen (8) angeordnet sind, aus Planeten (9), von denen jeder auf einem der Planetenbolzen (8) sitzt, und aus einer Sonne 10, mit welcher die Planeten (9) kämmen, gebildet ist und dass der zweite Planetentrieb (II) aus dem Planetenträger 35 gebildet ist, **dadurch gekennzeichnet, dass** an dem Planetenträger (35) weitere Planetenbolzen (8) angeordnet sind, wobei der zweite Planetentrieb (II) aus ersten Planeten (11), von denen jeder auf einem der weiteren Planetenbolzen (8) sitzt, und aus einer weiteren Sonne (12), mit welcher die ersten Planeten (11) kämmen, gebildet ist, wobei die Planeten (9) mit den ersten Planeten (11) kämmen *und dass die Überlagerungsstufe (6) einen Planetentrieb aufweist und als ein Stimradgetriebe ausgebildet ist, wobei die Getriebeanordnung einen Ausgangsplaneten des Planetentriebs der Überlagerungsstufe und ein mit dem Ausgangsplaneten drehfest gekoppelten Eingangsplaneten des Verteilergetriebes zur Einkoppelung des Zusatzdrehmoments in das Verteilergetriebe (5) aufweist*

2. Getriebeanordnung (1) nach Anspruch 1, **dadurch gekennzeichnet, dass** der Hilfsmotor (13) über die Überlagerungsstufe (6) in permanenter Wirkverbindung mit dem Verteilergetriebe (5) steht.

3. Getriebeanordnung (1) *nach Anspruch 1,* **dadurch gekennzeichnet, *dass*** *die Eingangsplaneten des Verteilergetriebes die erste Planeten (11) des Verteilergetriebes (5)* sind.

4. Getriebeanordnung (1) nach einem der vorhergehenden Ansprüche, **dadurch gekennzeichnet, dass** die Überlagerungsstufe (6) eine erste Sonne (14), die mit dem Hilfsmotor (13) koppelbar ist, und eine zweite Sonne (18), die stationär angeordnet ist, sowie eine dritte Sonne (22) aufweist.

5. Getriebeanordnung (1) nach Anspruch 4, **dadurch gekennzeichnet, dass** die dritte Sonne (22) über Planeten eines Planetentriebs (A,B)welcher die erste und die zweite Sonne (14,18) aufweist, angetrieben wird.

6. Getriebeanordnung (1) nach Anspruch 4, **dadurch gekennzeichnet, dass** die dritte Sonne (22) über Hohlräder eines Planetentriebs (A,B), welcher die erste und die zweite Sonne (14, 18) aufweist, angetrieben wird.

7. Getriebeanordnung (1) nach einem der vorhergehenden Ansprüche, **gekennzeichnet durch** einen den Hilfsmotor (13), welcher ein Drehmoment von mindestens 40 Nm, vorzugsweise mindestens 60 Nm und insbesondere mindestens 100 Nm aufweist.

8. Getriebeanordnung (1) nach einem der vorhergehenden Ansprüche, **dadurch gekennzeichnet, dass** das Verteilergetriebe (5) für eine Getriebelängsanordnung mit separaten Vorder- und Hinterraddifferentialgetrieben ausgebildet ist.

9. Getriebeanordnung (1) nach einem der vorhergehenden Ansprüche, **gekennzeichnet** als ein Front- Quergetriebe.

10. Getriebeanordnung (1) nach Anspruch 1, **dadurch gekennzeichnet, dass** das Verteilergetriebe (5) eine Planetenstufe (28) für den zweiten Achsenbereich (4) und eine Differentialstufe (29) für den ersten Achsenbereich (3) aufweist.

11. *Getriebeanordnung nach Anspruch 10, **dadurch gekennzeichnet, dass** der Eingangsplanet ein Planet (32, 33) der Planetenstufe (28) für den zweiten Achsenbereiche (4) ist.*

12. Getriebeanordnung (1) nach Anspruch 10, **dadurch gekennzeichnet, dass** die ersten Planeten (11) einem Planetensatz der Planetenstufe (28) zugeordnet sind.

13. Getriebe mit einer Getriebeanordnung (1) nach einem der vorhergehenden Ansprüche, **gekennzeichnet durch** mindestens ein Achsdifferentialgetriebe mit einer Überlagerungsstufe, welche zur Einkopplung des Drehmoments von einem weiteren Hilfsmotor ausgebildet ist.

## Claims

1. Drive assembly (1) for a vehicle, with a power divider (5) for distributing a drive torque of a main engine to a first and a second axle region (3, 4) of the vehicle, and with a lock-up stage (6), the lock-up stage (6) being designed for feeding an additional torque from an auxiliary engine (13) operatively connected to the power divider via the lock-up stage (6), via the power divider (5), to the first and/or the second axle region (3, 4), the power divider (5) designed as a spur gear having two planetary drives (I, II) combined with one another, the first planetary drive (I) being formed from a planet carrier (35), on which a plurality of planet bolts (8) are arranged, from planets (9), each of which is seated on one of the planet bolts (8), and from a sun wheel (10), with which the planets (9) mesh, and the second planetary drive (II) being formed from the planet carrier (35), **characterized in that** further planet bolts (8) are arranged on the planet carrier (35), the second planetary drive (II) being formed from first planets (11), each of which is seated on one of the further planet bolts (8), and from a further sun wheel (12), with which the first planets (11) mesh, the planets (9) meshing with the first planets (11), and **in that** the lock-up stage (6) has a planetary drive and is designed as a spur gear, the drive assembly having an output planet of the planetary drive of the lock-up stage and an input planet, coupled fixedly in terms of rotation to the output planet, of the power divider for feeding the additional torque into the power divider (5).

2. Drive assembly (1) according to Claim 1, **characterized in that** the auxiliary engine (13) is operatively connected permanently to the power divider (5) via the lock-up stage (6).

3. Drive assembly (1) according to Claim 1, **characterized in that** the input planets of the power divider are the first planets (11) of the power divider (5).

4. Drive assembly (1) according to one of the preceding claims, **characterized in that** the lock-up stage (6) has a first sun wheel (14), which can be coupled to the auxiliary engine (13), and a second sun wheel (18), which is arranged stationarily, and also a third sun wheel (22).

5. Drive assembly (1) according to Claim 4, **characterized in that** the third sun wheel (22) is driven via planets of a planetary drive (A, B) which has the first and the second sun wheel (14, 18).

6. Drive assembly (1) according to Claim 4, **characterized in that** the third sun wheel (22) is driven via ring wheels of a planetary drive (A, B) which has the first and the second sun wheel (14, 18).

7. Drive assembly (1) according to one of the preceding claims, **characterized by** an auxiliary engine (13) which has a torque of at least 40 Nm, preferably of at least 60 Nm and especially of at least 100 Nm.

8. Drive assembly (1) according to one of the preceding claims, **characterized in that** the power divider (5) is designed for a longitudinal drive assembly having separate front-wheel and rear-wheel differentials.

9. Drive assembly (1) according to one of the preceding claims, characterized as a front transverse drive.

10. Drive assembly (1) according to Claim 1, **characterized in that** the power divider (5) has a planetary stage (28) for the second axle region (4) and a differential stage (29) for the first axle region (3).

11. Drive assembly according to Claim 10, **characterized in that** the input planet is a planet (32, 33) of the planetary stage (28) for the second axle region (4).

12. Drive assembly (1) according to Claim 10, **characterized in that** the first planets (11) are assigned to a planet set of the planetary stage (28).

13. Transmission with a drive assembly (1) according to one of the preceding claims, **characterized by** at least one axle differential with a lock-up stage which is designed for feeding the torque from a further auxiliary engine.

## Revendications

1. Agencement de transmission (1) pour un véhicule comprenant une boîte de vitesses intermédiaire (5) pour distribuer un couple d'entraînement d'un moteur principal à une première et à une deuxième région d'essieu (3, 4) du véhicule, comprenant un étage de superposition (6), l'étage de superposition (6) étant réalisé pour injecter un couple supplémentaire d'un moteur auxiliaire (13) en liaison fonctionnelle avec la boîte de vitesses intermédiaire par le biais de l'étage de superposition (6) à la première et/ou à la deuxième région d'essieu (3, 4) par le biais de la boîte de vitesses intermédiaire (5), et la boîte de vitesses intermédiaire (5) réalisée sous forme de réducteur à engrenages cylindriques présentant deux engrenages planétaires (I, II) combinés l'un à l'autre, le premier engrenage planétaire (I) étant formé d'un porte-satellites (35) sur lequel sont disposés plusieurs boulons planétaires (8), de satellites (9), dont chacun repose sur l'un des boulons planétaires (8), et d'un pignon solaire (10), avec lequel s'engrènent les satellites (9) et le deuxième engrenage planétaire (II) étant formé du porte-satellites (35), **caractérisé en ce que** sur le porte-satellites (35) sont disposés d'autres boulons planétaires (8), le deuxième engrenage planétaire (II) étant formé de premiers satellite (11) dont chacun repose sur l'un des autres boulons planétaires (8), et d'un autre pignon solaire (12), avec lequel s'engrènent les premiers satellites (11), les satellites (9) s'engrenant avec les premier satellites (11) et **en ce que** l'étage de superposition (6) présente un engrenage planétaire et est réalisé sous forme de réducteur à engrenages cylindriques, l'agencement de transmission présentant un planétaire de sortie de l'engrenage planétaire de l'étage de superposition et un planétaire d'entrée de la boîte de vitesses intermédiaire accouplé de manière solitaire en rotation au planétaire de sortie pour l'injection du couple supplémentaire dans la boîte de vitesses intermédiaire (5).

2. Agencement de transmission (1) selon la revendication 1, **caractérisé en ce que** le moteur auxiliaire (13) est en liaison fonctionnelle permanente avec la boîte de vitesses intermédiaire (5) par le biais de l'étage de superposition (6).

3. Agencement de transmission (1) selon la revendication 1, **caractérisé en ce que** les planétaires d'entrée de la boîte de vitesses intermédiaire sont les premiers satellites (11) de la boîte de vitesses intermédiaire (5).

4. Agencement de transmission (1) selon l'une quelconque des revendications précédentes, **caractérisé en ce que** l'étage de superposition (6) présente un premier pignon solaire (14) qui peut être accouplé au moteur auxiliaire (13), et un deuxième pignon solaire (18) qui est disposé de manière stationnaire, ainsi qu'un troisième pignon solaire (22).

5. Agencement de transmission (1) selon la revendication 4, **caractérisé en ce que** le troisième pignon solaire (22) est entraîné par le biais de satellites d'un engrenage planétaire (A, B) qui présente le premier et le deuxième pignon solaire (14, 18).

6. Agencement de transmission (1) selon la revendication 4, **caractérisé en ce que** le troisième pignon solaire (22) est entraîné par le biais de couronnes d'un engrenage planétaire (A, B), qui présente le premier et le deuxième pignon solaire (14, 18).

7. Agencement de transmission (1) selon l'une quelconque des revendications précédentes, **caractérisé par** un moteur auxiliaire (13) qui présente un couple d'au moins 40 Nm, de préférence d'au moins 60 Nm, et notamment d'au moins 100 Nm.

8. Agencement de transmission (1) selon l'une quelconque des revendications précédentes, **caractérisé en ce que** la boîte de vitesses intermédiaire (5) est réalisée pour un agencement longitudinal de transmission avec des différentiels séparés de roues avant et de roues arrière.

9. Agencement de transmission (1) selon l'une quelconque des revendications précédentes, caractérisé en tant que transmission transversale avant.

10. Agencement de transmission (1) selon la revendication 1, **caractérisé en ce que** la boîte de vitesses intermédiaire (5) présente un étage planétaire (28) pour la deuxième région d'essieu (4) et un étage différentiel (29) pour la première région d'essieu (3).

11. Agencement de transmission selon la revendication 10, **caractérisé en ce que** le planétaire d'entrée est un planétaire (32, 33) de l'étage planétaire (28) pour la deuxième région d'essieu (4).

12. Agencement de transmission (1) selon la revendication 10, **caractérisé en ce que** les premier satellites (11) sont associés à un train planétaire de l'étage planétaire (28).

13. Transmission comprenant un agencement de transmission (1) selon l'une quelconque des revendications précédentes, **caractérisée par** au moins un engrenage différentiel d'essieu avec un étage de superposition, qui est réalisé pour l'injection du couple d'un moteur auxiliaire supplémentaire.
